# EUROPÄISCHE PATENTANMELDUNG

(11) **EP 3 228 497 A2**
(43) Veröffentlichungstag der Anmeldung: **11.10.2017**
(21) Anmeldenummer: 17157554.1
(22) Anmeldetag: 23.02.2017
(51) Int. Cl.: B60P 3/36

(54) **WOHNMOBIL**

(30) Priorität: 04.04.2016 DE 202016101758 U
(71) Anmelder: 4Pfoten-Mobile GmbH, 47509 Rheurdt (DE)
(72) Erfinder: BERGEM, Gerhard, 66265 Heusweiler (DE); DRÄBERT, Jörg, 47509 Rheurdt (DE)
(74) Vertreter: Buse, Mentzel, Ludewig Patentanwaltskanzlei

(57) **Zusammenfassung**

Die Erfindung betrifft ein Wohnmobil (10) mit einer zum Wohnen geeigneten Inneneinrichtung, welches über einen Kofferraum, im Weiteren Garage (13) genannt, verfügt. Weiterhin verfügt das Wohnmobil (10) über eine Einrichtung zur Unterbringung wenigstens eines Hundes. Die Erfindung schlägt nun vor, dass als Einrichtung eine Box (20) dient, die aus mehreren Wänden, insbesondere Holzwänden, besteht und welche in der Garage (13) angeordnet ist. Die Box (13) ist sowohl vom Innenraum (11) des Wohnmobils (10) als auch von dessen Außenseite (12) her über zwei Türen (22, 23), bevorzugt zwei Gittertüren, zugänglich, nämlich über eine erste Tür (22), die die Box (20) zum Innenraum (11) des Wohnmobils (10) sichert und über eine zweite Tür (23), die die Box (20) zur Außenseite (12) hin sichert. Weiterhin ist eine Rampe (30) vorgesehen, die von der Außenseite (12) des Wohnmobils (10) her im Benutzungsfall den Abstand (31) zwischen der Box (20) und dem Boden (14) überbrücken kann.

## Beschreibung

Die Erfindung betrifft ein Wohnmobil der im Oberbegriff von Anspruch 1 genannten Art. Derartige Wohnmobile erfreuen sich großer Beliebtheit, insbesondere bei Urlaubsreisen, Ausflügen und Ähnlichem. Nachteilig ist es jedoch, wenn die mit dem Wohnmobil verreisenden Personen auch einen oder mehrere Hunde mitnehmen wollen. Der Hund muss während der Fahrt gesichert werden und je nach Größe des Hundes kann dies schwierig werden. Auch wenn das Wohnmobil an einem Stellplatz angelangt ist, wo es über Nacht oder für einen längeren Zeitraum stehen bleiben soll, ist es fraglich, wie der Hund komfortabel untergebracht werden kann.

Es gibt bereits Wohnmobile, die an ihrer Außenseite ein oder mehrere Anschlagringe aufweisen, an denen man die Leine eines Hundes befestigen kann, um diesen im Bereich des Wohnmobils zu sichern. Trotzdem gibt es noch keine umfassende Möglichkeit, mit einem Hund in einem Wohnmobil sicher und komfortabel zu verreisen.

Aufgabe der Erfindung ist es daher, ein Wohnmobil dahingehend zu verbessern, dass auch für die Sicherheit und Unterbringung eines oder mehrerer Hunde im Wohnmobil gesorgt ist und der Reisekomfort für die Personen und Hunde nicht beeinträchtigt wird. Diese Aufgabe wird durch die kennzeichnenden Merkmale des Anspruchs 1 gelöst, denen folgende besondere Bedeutung zukommt.

Das Wohnmobil verfügt über eine sogenannte Garage, in welcher üblicherweise Gegenstände, wie Gepäck, Klappstühle, Liegen, ein Klapptisch und Ähnliches untergebracht werden können. In dieser Garage wird erfindungsgemäß eine Box für die Unterbringung von Hunden durch Wände, insbesondere durch Holzwände abgetrennt. Die Box weist zwei Türen auf, nämlich eine erste Tür, die die Box zum Innenraum des Wohnmobils hin sichert und eine zweite Tür, die die Box zur Außenseite hin sichert. So kann je nach Belieben die entsprechende Tür geöffnet werden, um dem Hund die Möglichkeit zu geben, entweder in den Innenraum des Wohnmobils zu gelangen oder die Box und das Wohnmobil komplett zu verlassen. Die Box ist dann gemäß der Erfindung sowohl vom Innenraum des Wohnmobils als auch von der Außenseite her zugänglich. Die Türen bestehen dabei aus Gittern, so dass der oder die Hunde auch durch die jeweilige Tür betrachtet werden können. An der Außenseite wird dann noch eine Rampe angeordnet, die den Abstand zwischen der Box und dem Boden überbrückt und über die der Hund bequem in die Box hinein und aus der Box herausgehen kann. Besonders vorteilhaft ist es, wenn die zweite, zur Außenseite hin sichernde Tür, abschließbar ausgestaltet ist.

Während der Fahrt können so ein oder mehrere Hunde sicher in der Box untergebracht werden. Soll ein Hund aus der Box in den Innenraum des Wohnmobils verbracht werden, geschieht dies auf einfache Weise, da die Box vom Innenraum her zugänglich ist. Ist das Wohnmobil geparkt, kann die Box auch von der Außenseite her geöffnet werden. Durch die Rampe ist es für den Hund auf einfache, ergonomische und bequeme Art und Weise möglich, die Box zu verlassen bzw. auch wieder in die Box hineinzugehen. Dies ist für Hunde jeglicher Größe komfortabel durchführbar.

Vorteilhafterweise kann die Rampe in einem Bereich unterhalb der Box verstaut werden, wenn sie nicht in Benutzung ist, beispielsweise während der Fahrt. So ist die Rampe nicht im Weg und nimmt keinen zusätzlichen Raum ein. Darüber hinaus ist der Boden der Box ein wenig erhöht angebracht, was den Höhenunterschied zwischen dem Boden der Box und dem Boden des Innenraums des Wohnmobils verringert. So kann der Hund auch bequem aus der Box in den Innenraum des Wohnmobils gelangen, sobald man es ihm gestattet.

Besonders vorteilhaft kann die Rampe mittels eines Schienensystems in den Bereich unterhalb der Box hineingeschoben und von dort wieder herausgezogen werden. Dies ist für eine Bedienperson besonders komfortabel.

So kann kein Unbefugter die Tür einfach von außen öffnen und Zugriff auf den Hund haben, sondern dies kann nur durch eine befugte Person mit Schlüssel geschehen.

Empfehlenswerterweise sind den beiden Türen der Box auch korrespondierende Klappen am Wohnmobil zugeordnet. Hierbei existiert erste Klappe, die die Garage und die Box zum Innenraum hin abdeckt. Dies kann beispielsweise dann sinnvoll sein, wenn sich ein oder mehrere Hunde in der Box befinden die schlafen und sich eventuell durch Licht oder Geräusche aus dem Innenraum des Wohnmobils gestört fühlen könnten. Eine zweite Klappe deckt die Garage und die Box zur Außenseite hin ab. Diese Klappe ist auch während der Fahrt geschlossen, damit sowohl die Box als auch eventuelle weitere in der Garage gelagerte Gegenstände nach außen hin abgesichert sind und das Wohnmobil zur Außenseite hin abgedichtet ist.

Vorteilhafterweise nimmt die Box nur einen Teil der Garage ein, während ein anderer Bereich als Stauraum freibleibt. Dieser Stauraum kann dann auch weiterhin wie üblich genutzt werden, um beispielsweise Gartentische und - stühle oder andere Gegenstände unterzubringen. Zwischen dem Stauraum und der Box ist dann eine Trennwand vorgesehen, die beide Bereiche voneinander abtrennt.

Im Bereich der Box an der Außenwand des Wohnmobils zur Außenseite hin kann ein Fenster vorgesehen sein. Dies ermöglicht im geöffneten Zustand den Eintritt von Licht und Luft in den Bereich der Box. Dies macht es für den Hund besonders komfortabel, da er ggf. aus dem Fenster hinaus sehen kann und eine direkte Frischluftzufuhr hat. Das geöffnete Fenster kann mit Fliegengitter gegen den Eintritt von Insekten abgesichert werden.

Weiterhin kann im Wohnmobil noch eine Kamera vorgesehen sein, die das Innere der Box aufnimmt und auf einem Monitor oder Ähnlichem im Inneren des Wohnmobils wiedergibt oder auch die Bilder über das Internet an ein mit dem Internet verbundenes Gerät, wie einem Smartphone oder einem Tablet-PC, einem Notebook oder Ähnlichem anzeigt. Die Kamera kann auch als Nachtsichtkamera ausgestaltet sein. So ist es möglich, das Innere der Box und darin befindliche Hunde, beispielsweise während der Fahrt oder auch im geparkten Fahrzeug zu beobachten. Bei der Verwendung einer Nachtsicherkamera kann dies auch geschehen, wenn der Bereich der Box unbeleuchtet ist. So kann überprüft werden, ob der in der Box befindliche Hund schläft, ob es ihm gut geht, usw.

Die Box kann auch mit einer Hundematte ausgelegt sein, was für die dort befindlichen Hunde besonders komfortabel ist. Weiterhin kann auch ein Napf in der Box vorgesehen sein. Hierdurch kann der Hund auch während der Fahrt bzw. während er sich in der Box befindet, Futter oder Wasser zu sich nehmen. Besonders bevorzugt ist hier ein sogenannter Anti-Schlabber-Napf, welcher im oberen Bereich eine Sicherung gegen Verschütten und Verspritzen aufweist und mit seinem Boden am Boden der Box, beispielsweise über eine Klettverbindung oder Ähnliches, befestigt werden kann. Hierdurch wird das Risiko von Spritzern und Verschmutzungen durch verschüttetes oder verschlabbertes Wasser bzw. Futter vermieden.

Weiterhin kann das Wohnmobil an der Außenseite noch eine Hundedusche aufweisen, mittels der der Hund vor dem Betreten des Wohnmobils bzw. der Box abgeduscht werden kann. Dies ist insbesondere dann sinnvoll, wenn der Hund nach einem Spaziergang oder Ausflug dreckige oder schlammige Pfoten hat. Hierdurch wird das Innere der Box und des Wohnmobils entsprechend geschont und Verschmutzungen werden vermieden.

Das Wohnmobil kann weiterhin im Außenbereich ein oder mehrere Anschlagringe aufweisen, um den Hund mittels einer Leine am Wohnmobil zu sichern. So kann sich der Hund nicht vom Wohnmobil entfernen, wenn das Wohnmobil abgestellt ist und die Bedienpersonen sich z.B. draußen aufhalten, um beispielsweise ein Sonnenbad zu nehmen, zu grillen, Sport zu treiben oder Ähnliches. Der Hund kann sich dann zwar ein bisschen im Bereich des Wohnmobils außen bewegen, sich jedoch nicht vollständig vom Wohnmobil entfernen.

Schließlich können im Innenraum des Wohnmobils im Bodenbereich ein oder mehrere zusätzlich Gurtschlösser vorgesehen sein, um den Hund während der Fahrt mittels eines Sicherheits-Schutz-Geschirrs an diesen Gurtschlössern zu sichern. So befindet sich der Hund nahe der Bedienpersonen im Innenraum des Wohnmobils und ist trotzdem vorschriftsmäßig gesichert.

Weitere Vorteile und Ausführungsbeispiele ergeben sich aus der nachfolgenden Beschreibung, den Unteransprüchen und den Zeichnungen. In den Zeichnungen ist das erfindungsgemäße Wohnmobil schematisch in einer Ausführungsform dargestellt. Es zeigen:
- Fig. 1:: einen Teil des Wohnmobils im Bereich der Garage von der Außenseite her in Seitenansicht,
- Fig. 2:: der Bereich aus Fig. 1 in Rückansicht,
- Fig. 3:: ein Bereich des Wohnmobils mit Box vom Innenraum her in Vorderansicht,
- Fig. 4:: der Bereich aus Fig. 3 in Draufsicht.
- Fig. 5:: eine Innenansicht eines Wohnmobils in Draufsicht, schematisch

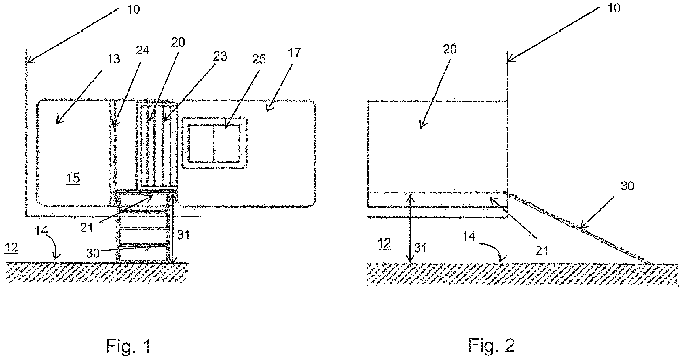

Die Fig. 1 und 2 zeigen einen Teil eines erfindungsgemäßen Wohnmobils 10 in schematischer Darstellung von der Außenseite 12 her. Man erkennt in der Garage 13, eine Box 20 sowie einen Stauraum 15. Die Box 20 und der Stauraum 15 werden durch eine Trennwand 24 voneinander abgetrennt, die auch gleichzeitig eine Seitenwand der Box 20 darstellt. Die Box 20 weist eine zweite Tür 23 auf, die von einer zweiten Klappe 17 verschlossen werden kann. Ist die zweite Tür 23 geöffnet, kann über die Rampe 30 ein Hund die Box 20 verlassen bzw. betreten. Die Rampe 30 überwindet dabei den Abstand 31 zwischen der Box 20 und dem Boden 14. Dies macht es dem Hund sehr bequem, die Box 20 zu verlassen und wieder zu betreten. Wird die Rampe 30 nicht benötigt, kann diese in dem Bereich 21 unterhalb der Box 20 verstaut werden. So ist sie nicht im Weg und der Boden der Box 20 wir etwas erhöht. Daher weist dieser eine geringere Höhendifferenz zum Boden des Innenraums 11 des Wohnmobils 10 auf, was das Verlassen der Box 20 in Richtung des Innenraums 11 für einen Hund komfortabel macht.

Schließlich erkennt man noch das Fenster 25. Dieses kann geöffnet oder geschlossen werden, um im Bereich der Box 20 für eine gute Luft- und Lichtzufuhr von außen und sorgen. Bei geöffnetem Fenster 25 kann trotzdem noch ein Fliegengitter vorgesehen sein, um zu vermeiden, dass Ungeziefer und Insekten in die Box 20 bzw. das Wohnmobil 10 gelangen.

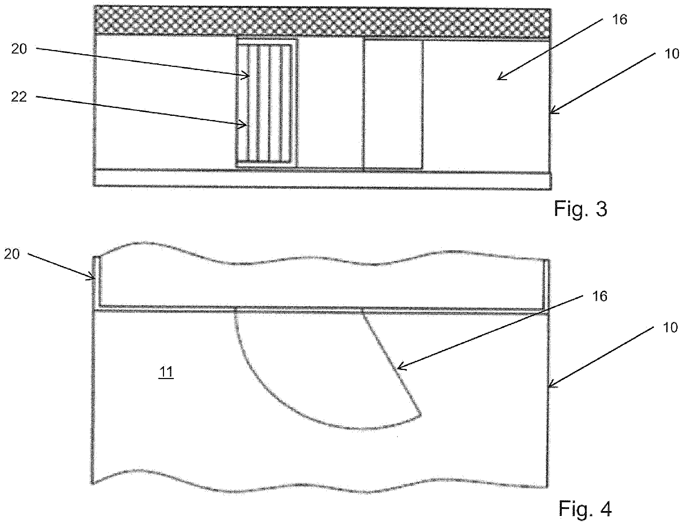

Die Fig. 3 und 4 zeigen einen Ausschnitt aus dem Innenraum 11 des Wohnmobils 10. Auch hier ist eine Klappe 16 vorgesehen, welche die Box 20 vom Innenraum 11 des Wohnmobils 10 trennt. Die Box 20 weist hier eine erste Tür 22 auf, die geöffnet werden kann, damit ein Hund den Innenraum 11 des Wohnmobils 10 betreten kann. Soll der Hund in der Box 20 seine Ruhe haben, beispielsweise um zu schlafen, so können sowohl die erste Tür 22 als auch die erste Klappe 16 verschlossen werden. Dadurch wird das Eindringen von Licht und Geräuschen aus dem Innenraum 11 in die Box 20 verringert.

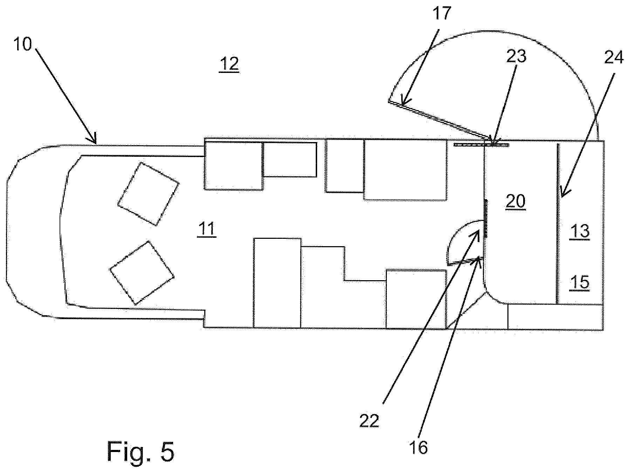

Fig. 5 zeigt nunmehr eine schematische Darstellung des erfindungsgemäßen Wohnmobils 10 von oben. Man erkennt im Innenraum 11 eine schematische Darstellung von Möbelstücken und Einrichtungsgegenständen. Außerdem erkennt man die Garage 13, in der sich sowohl die Box 20 als auch der Stauraum 15 befinden. Beide Bereiche sind durch die Trennwand 24 voneinander abgegrenzt.

Des Weiteren sieht man die erste Tür 22 und die erste Klappe 16, die die Box 20 in Richtung des Innenraums 11 des Wohnmobils 10 sichern. Ungefähr im rechten Winkel dazu sind die zweite Tür 23 und die zweite Klappe 17 angeordnet, die die Box 20 zur Außenseite 12 hin absichern. Die Rampe 30 ist hier nicht dargestellt. In dieser Darstellung befindet sich die Garage 13 unterhalb des Bettes.

Abschließend sei noch darauf hingewiesen, dass die hier dargestellten Ausführungsformen nur beispielhafte Verwirklichungen der Erfindung sind. Diese ist nicht darauf beschränkt. So kann beispielsweise die Garage auch andernorts und nicht nur unterhalb des im Wohnmobil vorgesehenen Bettes angeordnet sein. Wenn hier von einem Hund gesprochen wird, so ist es selbstverständlich auch möglich, mehrere Hunde mit sich zu führen und in der Box unterzubringen. Auch zusätzliche Einrichtungen für Hunde sind im Zusammenhang mit diesem Wohnmobil denkbar. Unter dem Begriff Wohnmobil sind auch jegliche Arten von Karavans, Campingbussen, umgebauten Kastenwagen und Alkovenwagen zu verstehen. Der Begriff ist bewusst breit auszulegen.

### Bezugszeichenliste:

- 10: Wohnmobil
- 11: Innenraum vom 10
- 12: Außenseite von 10
- 13: Garage
- 14: Boden
- 15: Stauraum
- 16: Erste Klappe
- 17: Zweite Klappe
- 20: Box
- 21: Bereich unterhalb von 20
- 22: Erste Tür
- 23: Zweite Tür
- 24: Trennwand
- 25: Fenster
- 30: Rampe
- 31: Abstand zwischen 20 und 14

## Patentansprüche

1. Wohnmobil (10) mit einer zum Wohnen geeigneten Inneneinrichtung,
welches über einen Kofferraum, im Weiteren Garage (13) genannt, verfügt,
welches weiterhin über eine Einrichtung zur Unterbringung wenigstens eines Hundes verfügt,
**dadurch gekennzeichnet,**
**dass** als Einrichtung eine Box (20) dient, die aus mehreren Wänden, insbesondere Holzwänden besteht und welche in der Garage (13) angeordnet ist,
das die Box (13) sowohl vom Innenraum (11) des Wohnmobils (10) als auch von dessen Außenseite (12) her über zwei Türen (22, 23), bevorzugt zwei Gittertüren zugänglich ist, nämlich über eine erste Tür (22), die die Box (20) zum Innenraum (11) des Wohnmobils (10) sichert und über eine zweite Tür (23), die die Box (20) zur Außenseite (12) hin sichert
und **dass** eine Rampe (30) vorgesehen ist, die von der Außenseite (12) des Wohnmobils (10) her im Benutzungsfall den Abstand (31) zwischen der Box (20) und dem Boden (14) überbrücken kann.

2. Wohnmobil (10) nach Anspruch 1, **dadurch gekennzeichnet, dass** die Rampe (30) in einem Bereich (21) unterhalb der Box (20) verstaubar ist, wenn sie nicht in Benutzung ist.

3. Wohnmobil (10) nach Anspruch 2, **dadurch gekennzeichnet, dass** die Rampe (30) mittels eines Schienensystems in den Bereich (21) unterhalb der Box (20) schiebbar und dort wieder herausziehbar ist.

4. Wohnmobil (10) nach Anspruch 1 bis 3, **dadurch gekennzeichnet, dass** zumindest die zweite Tür (23) abschließbar ausgestaltet ist.

5. Wohnmobil (10) nach einem der Ansprüche 1 bis 4, **dadurch gekennzeichnet, dass** zu den beiden Türen (22, 23) der Box (20) auch noch korrespondierende Klappen am Wohnmobil (10) vorgesehen sind, nämlich eine erste Klappe (16), die die Garage (13) und die Box (20) zum Innenraum (11) hin abdeckt und eine zweite Klappe (17), die die Garage (13) und die Box (20) zur Außenseite (12) hin abdeckt.

6. Wohnmobil (10) nach einem der Ansprüche 1 bis 5, **dadurch gekennzeichnet, dass** die Box (20) nur einen Teil der Garage (13) einnimmt, während der andere Bereich als Stauraum (15) frei bleibt und dass eine Trennwand (24) zwischen der Box (20) und dem Stauraum (15) vorgesehen ist, die beide Bereiche voneinander trennt und gleichzeitig eine Seitenwand der Box (20) bildet.

7. Wohnmobil (10) nach einem der Ansprüche 1 bis 6, **dadurch gekennzeichnet, dass** im Bereich der Box (20) zur Außenseite (12) hin ein Fenster (25) vorgesehen ist, um den Eintritt von Licht und Luft in den Bereich der Box (20) zu ermöglichen.

8. Wohnmobil nach einem der vorhergehenden Ansprüche, **dadurch gekennzeichnet, dass** eine Kamera vorgesehen ist, die das Innere der Box aufnimmt und auf einem Monitor o.ä. im Inneren des Wohnmobils oder über ein mit dem Internet verbundenen Gerät, wie einem Smartphone, einem Tablet-PC, einem Notebook o.ä. wider gibt.

9. Wohnmobil (10) nach einem der vorhergehenden Ansprüche, **dadurch gekennzeichnet, dass** die Box (20) mit einer Hundematte auslegbar ist.

10. Wohnmobil (10) nach einem der vorhergehenden Ansprüche, **dadurch gekennzeichnet, dass** ein Napf, insbesondere ein Anti-Schlabber-Napf in der Box (20) vorgesehen ist.

11. Wohnmobil (10) nach einem der vorhergehenden Ansprüche, **dadurch gekennzeichnet, dass** an der Außenseite (12) eine Hundedusche vorgesehen ist, mittels der der Hund abgeduscht werden kann bevor er das Wohnmobil (10) und/oder die Box (20) betritt.

12. Wohnmobil (10) nach einem der vorhergehenden Ansprüche, **dadurch gekennzeichnet, dass** im Außenbereich (12) des Wohnmobils (10) ein oder mehrere Anschlagringe vorgesehen sind, um den Hund unter Zwischenschaltung einer Leine an dem Wohnmobil (10) zu sichern.

13. Wohnmobil (10) nach einem der vorhergehenden Ansprüche, **dadurch gekennzeichnet, dass** im Innenraum (11) im Bodenbereich ein oder mehrere zusätzliche Gurtschlösser angeordnet sind, um den Hund während der Fahrt mittels eines Sicherheits-Schutzgeschirrs zu sichern.
